Europäisches Patentamt

European Patent Office

Office européen des brevets

(19)

(11) Veröffentlichungsnummer: **0 153 578**
**B1**

(12) **EUROPÄISCHE PATENTSCHRIFT**

(45) Veröffentlichungstag der Patentschrift:
24.05.89

(51) Int. Cl.⁴: **B 27 C 1/10**

(21) Anmeldenummer: **85100486.1**

(22) Anmeldetag: **18.01.85**

(54) Handhobelmaschine.

(30) Priorität: **24.02.84 DE 3406728**

(43) Veröffentlichungstag der Anmeldung:
**04.09.85 Patentblatt 85/36**

(45) Bekanntmachung des Hinweises auf die Patenterteilung:
**24.05.89 Patentblatt 89/21**

(84) Benannte Vertragsstaaten:
**AT BE CH FR GB IT LI NL SE**

(56) Entgegenhaltungen:
**EP-A- 0 003 778**
**DE-A- 2 141 584**

(73) Patentinhaber: **Karl M. Reich, Maschinenfabrik GmbH, Kisslingstrasse 1 Postfach 1740, D-7440 Nürtingen (DE)**

(72) Erfinder: **Zaiser, Adolf, Lilienweg 3, D-7316 Köngen (DE)**
Erfinder: **Raichle, Dieter, Reuderner Strasse 109, D-7440 NT-Reidern (DE)**
Erfinder: **Schwaiger, Helmut, Nürtinger Strasse 92, D-7441 Unterensingen (DE)**
Erfinder: **Hermann, Adolf, Seilerbahn 5, D-7441 Neckartailfingen (DE)**
Erfinder: **Bischof, Edgar, Urbanstrasse 23, D-7443 Frickenhausen-3 (DE)**

ACTORUM AG

## Beschreibung

Die vorliegende Erfindung betrifft eine Handhobelmaschine gemäß Oberbegriff von Anspruch 1.

Aus dem DE-U-78 12 329 ist eine solche Handhobelmaschine bekannt, wobei der größte Teil des Kühlluftstroms zum Ausblasen der Späne in den Spanauswurfkanal geleitet wird. Diese Späne erhalten dadurch zusammen mit der vom Hobelkopf erteilten Geschwindigkeit eine hohe kinetische Energie, die dazu führen kann, daß sie sich ineinander verkeilen und den Spanauswurfkanal verstopfen. Die ausgeworfenen Späne können darüberhinaus den Spanauswurfkanal nur nach einer Seite verlassen, so daß der Bedienungsmann bei bestimmten Arbeitspositionen von den ausgeworfenen Spänen getroffen und belästigt wird.

Aufgabe der vorliegenden Erfindung ist daher die Schaffung einer Handhobelmaschine der eingangs genannten Art, bei der die Späne sicher und ohne Verstopfung aus dem Spanauswurfkanal hinausbefördert werden.

Diese Aufgabe wird erfindungsgemäß durch das im kennzeichnenden Teil des Anspruchs 1 angegebene Merkmal gelöst.

Bei Versuchen hat es sich in überraschender Weise gezeigt, daß erst die Zuführung einer verhältnismäßig geringen Teilmenge der Motorkühlluft in den Spanauswurfkanal eine einwandfreie Abführung der Späne ins Freie sicher gewährleistet. Bei dieser verringerten Luftmenge findet also kein Verkeilen der Späne statt und sie werden bei allen Arbeitsbedingungen sicher ins Freie befördert.

Dies macht sich besonders vorteilhaft bei Verwendung einer Umlenkklappe im Spanauswurfkanal bemerkbar, durch die der auszuwerfende Spänestrom beliebig nach einer der beiden Seiten gelenkt werden kann. Mündet der Durchbruch für den Luftstrom unter der in Auswurfstellung für die gegenüberliegende Seite geschwenkten Umlenkklappe, so tritt die beobachtete Wirkung am besten ein. Wird jedoch bei diesem einseitigen Durchbruch die Umlenkklappe so geschwenkt, daß die Späne auf der Seite des Durchbruches ausgeworfen werden, dann wird selbst bei dieser Anordnung eine wesentliche Verbesserung des Spanauswurfes erzielt.

Weitere vorteilhafte Merkmale ergeben sich aus den Unteransprüchen. So ergibt sich z.B. durch Verstellen des Einstellelementes im Verbindungskanal die Möglichkeit, den Luftstrom den jeweils vorliegenden Arbeitsbedingungen anzupassen.

Im folgenden ist ein Ausführungsbeispiel der Erfindung unter Bezugnahme auf die Zeichnungen näher beschrieben.

Es zeigen:

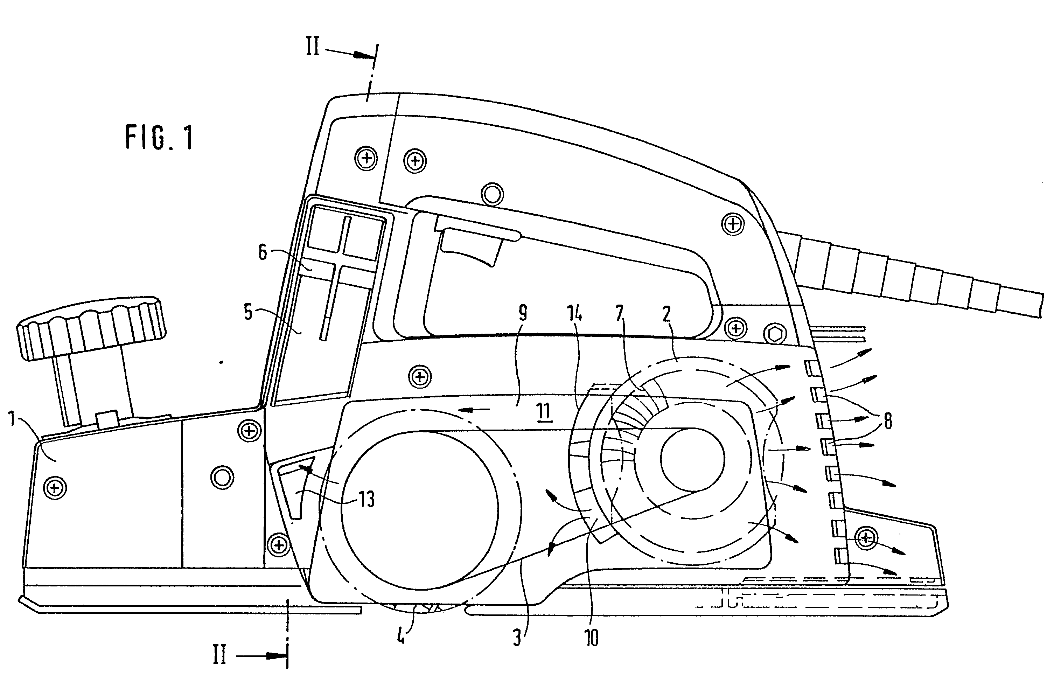

Fig. 1 Handhobelmaschine von der Antriebsseite, Haube abgenommen.

Fig. 2 Schnitt nach Linie II–II in Fig. 1.

In einem Gehäuse 1 der Handhobelmaschine ist ein Elektromotor 2 angeordnet, der über einen Riemen 3 den Hobelkopf 4 antreibt. Die von diesem Hobelkopf 4 vom Werkstück abgenommenen Späne gelangen nach oben über einen Spanauswurfkanal 5 ins Freie.

In diesem Spanauswurfkanal 5 ist um eine im wesentlichen waagrechte Achse eine Umlenkklappe 6 so schwenkbar gelagert, daß der Spänestrom nach einer der beiden Seiten der Handhobelmaschine ins Freie gelenkt wird.

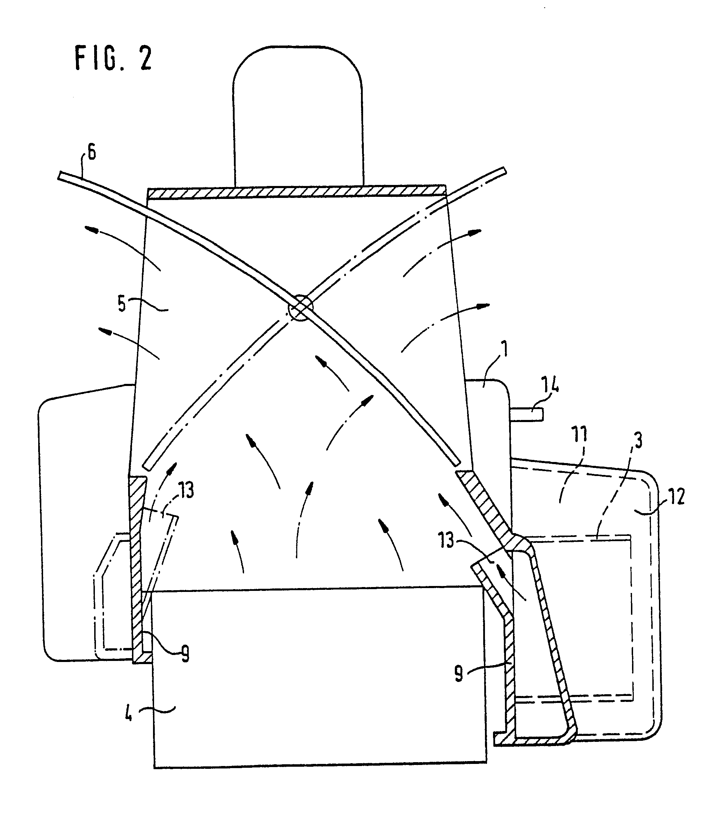

Zur Kühlung des Motors dient ein Lüfter 7, der den Kühlluftstrom achsial durch den Elektromotor saugt und den größten Teil dieses Kühlluftstroms durch Schlitze 8 ins Freie befördert. In einer Seitenwand 9 von Gehäuse 1 ist jedoch ein Fenster 10 vorgesehen, durch das ein geringer Teil der Kühlluft in den Raum 11 gelangen kann, in dem der Riemen 3 angeordnet ist. Dieser Raum 11 ist durch eine Abdeckhaube 12 umschlossen (Fig. 2).

Raum 11 erstreckt sich bis unter den Spanauswurfkanal 5 und ist mit diesem durch einen schräg nach oben führenden Durchbruch 13 verbunden.

Befindet sich die Umlenkklappe 6 in der in Fig. 2 ausgezogen dargestellten Stellung, so mündet der Durchbruch 13 unter dieser Umlenkklappe 6 und bildet mit seiner Neigung eine Verlängerung der Neigung der Umlenkklappe. Der abgezweigte Anteil der Kühlluft wird somit an der Umlenkklappe entlanggeführt und sorgt für einen einwandfreien Abfluss der Späne.

Befindet sich die Umlenkklappe in der in Fig. 2 strichpunktiert dargestellten Stellung, dann erzeugt der abgezweigte Kühlluftstrom auch in diesem Falle eine solche Luftströmung im Spanauswurfkanal 5, daß die Späne einwandfrei abgeführt werden.

Zur Verbesserung dieser Wirkung kann natürlich vorgesehen sein, zu beiden Seiten des Spanauswurfkanales 5 je einen Durchbruch 13 vorzusehen.

Zur Einstellung des abgezweigten Luftstromes an die verschiedenen Arbeitsbedingungen ist im Fenster 10 ein Einstellelement in Form eines Schiebers 14 vorgesehen, der vom Bedienungsmann von Hand beliebig einstellbar ist. Damit wird das Fenster 10 mehr oder weniger geöffnet und damit die Menge der dem Spanauswurfkanal 5 zuzuführende Luftmenge reguliert.

Die günstigste Ausblasluftmenge beträgt 5–10% der gesamten Kühlluftmenge. Sie kann unter bestimmten Bedingungen bis zu 30% der Kühlluftmenge betragen.

## Patentansprüche

1. Handhobelmaschine mit einem Gehäuse (1), in dem ein von einem Elektromotor (2) antreibbarer Hobelkopf (4) drehbar gelagert ist, einem mit dem Elektromotor (2) verbundenen Lüfter (7) zur Erzeugung der Motorkühlluft, mit einer vom Lüfter (7) ins Freie führenden Abluftleitung (8) und mit einem Spanauswurfkanal (5), dem vom Lüfter (7) über einen Verbindungskanal (11) ein Teil der Motorkühlluft zuführbar ist, dadurch gekennzeichnet, daß zwischen Lüfter (7) und Verbindungskanal (11) ein Fenster (10) zur Abzweigung eines Teils der Kühlluftmenge vorgesehen ist, daß über dem Hobelkopf (4) eine um eine waagrechte Achse schwenkbare Umlenkklappe (6) angeordnet ist und daß in einer Seitenwand (9) des Verbindungskanals (11) mindestens ein in den Spanauswurfkanal (5) schräg nach oben führender Durchbruch (13) für die Ausblasluft vorgesehen ist.

2. Handhobelmaschine nach Anspruch 1, dadurch gekennzeichnet, daß der Durchbruch (13) unter der in Auswurfstellung für die gegenüberliegende Seite geschwenkte Umlenkklappe (6) mündet und daß seine Neigung im wesentlichen der Neigung der Umlenkklappe (6) in dieser Stellung entspricht.

3. Handhobelmaschine nach Anspruch 2, dadurch gekennzeichnet, daß in den beiden gegenüberliegenden Seitenwänden (9) Durchbrüche (13) vorgesehen sind.

4. Handhobelmaschine nach einem der Ansprüche 1 bis 3, dadurch gekennzeichnet, daß im Fenster (10) ein Einstellelement (14) zur Einstellung der dem Spanauswurfkanal (5) zuzuführenden Ausblasluftmenge vorgesehen ist.

## Claims

1. A hand planing machine having a casing (1) in which a cutter head (4) drivable by an electric motor (2) is pivotably mounted, a fan (7) to generate motor cooling air and connected to said electric motor (2), an exhaust line (8) leading from said fan (7) into the open, and a shavings ejection channel (5) to which part of said motor cooling air is suppliable via a connecting duct (11) characterized in that a window (10) is provided between said fan (7) and said connecting duct (11) to branch off part of the cooling air quantity, that a deflection flap (6) swivellable about a horizontal axis is arranged above said cutter head (4), and that at least one passage (13) leading obliquely upwards into said shavings ejection channel (5) is provided for the blow-out air in a side wall (9) of said connecting duct (11).

2. A hand planing machine according to Claim 1, characterized in that the passage (13) ends underneath the deflection flap (6) swivelled into the ejection position for the opposite side, and that the inclination of said passage substantially corresponds to the angle of said deflection flap (6) in this position.

3. A hand planing machine according to Claim 2, characterized in that passages (13) are provided in the two opposite side walls (9).

4. A hand planing machine according to one of Claims 1 to 3, characterized in that a setting element (14) for setting the blow-out air quantity to be supplied to the shavings ejection channel (5) is provided in the window (10).

## Revendications

1. Raboteuse à main avec un boîtier (1) dans lequel est logée une tête de rabot (4) tournante, un ventilateur (7) pour la génération de l'air de refroidissement du moteur, avec conduite (8) amenant l'air d'évacuation du ventilateur (7) vers l'extérieur et avec un canal d'éjection des copeaux (5) sur lequel peut être amenée, à travers un canal de jonction (11), une partie de l'air de refroidissement du moteur produit par le ventilateur (7), caractérisée en ce que entre le ventilateur (7) et le canal de jonction (11) est prévue une ouverture (10) pour la déviation d'une partie de l'air de refroidissement, qu'un clapet de déviation (6) pivotable autour d'un axe horizontal est disposé au-dessus de la tête de rabot (41) et qu'au moins un percement (13) menant en biais vers le haut dans le canal d'éjection des copeaux (5) est prévu dans une des parois latérales (9) du canal de jonction (11) pour l'air évacué.

2. Raboteuse à main selon la revendication 1, caractérisée en ce que le percement (13) aboutit dans le clapet de déviation (6) pivoté en position d'éjection pour la face opposée et que la déclivité du percement (13) correspond essentiellement à la déclivité du clapet de déviation (6) dans cette position.

3. Raboteuse à main selon la revendication 2, caractérisée en ce que des percements (13) sont prévus dans les deux parois latérales (9) se faisant face.

4. Raboteuse à main selon l'une des revendications 1 à 3, caractérisée en ce qu'un élément de réglage (14) est prévue dans l'ouverture (10) pour le réglage de la quantité d'air d'évacuation à amener dans le canal d'éjection de copeaux (5).

FIG. 1

FIG. 2